# EUROPÄISCHE PATENTANMELDUNG

(11) **EP 2 194 079 A1**
(43) Veröffentlichungstag der Anmeldung: **09.06.2010**
(21) Anmeldenummer: 08170987.5
(22) Anmeldetag: 08.12.2008
(51) Int. Cl.: C08F 290/06, C08F 290/14, C08F 222/00, C08F 220/00, C08F 216/00, C08F 2/38

(54) **Semikontinuierlich betriebenes Verfahren zur Herstellung von Copolymeren**

(71) Anmelder: Construction Research and Technology GmbH, 83308 Trostberg (DE)
(72) Erfinder: Albrecht, Gerhard, 83209, Prien (DE); Arlt, Klaus, 83278, Traunstein (DE); Mack, Helmut, 83278, Traunstein (DE); Flakus, Silke, 85560, Ebersberg (DE); Vierle, Mario, 83512, Wasserburg (DE); Lorenz, Klaus, 84539, Zangberg (DE); Wagner, Petra, 83308, Trostberg (DE); Scholz, Christian, 83308, Trostberg (DE); Wimmer, Barbara, 83342, Tacherting (DE)

(57) **Zusammenfassung**

Die Erfindung betrifft ein Verfahren zur Herstellung eines Copolymers in semikontinuierlicher Betriebsweise in einer Polymerisationsvorrichtung, enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, wobei die Dosierung des Säuremonomers in den Polymerisationsreaktor so lange erfolgt bis mindestens 70 Mol-% des vorgelegten Polyethermakromonomers durch die Polymerisation umgesetzt sind und das eingesetzte Polyethermakromonomer in der Form bereitgestellt wird, dass dem eingesetzten Polyethermakromonomer 0,1 ppm bis 10000 ppm eines als organische Verbindung vorliegenden Stabilsators zugesetzt ist, der sich für die Hemmung der oxidativen Zersetzung von in Polyethern vorhandenen Alkoxygruppen eignet und/ oder das eingesetzte Polyethermakromonomer unter Abreicherung von gelöstem Sauerstoff mit gelöstem Stickstoff angereichert ist.

## Beschreibung

Die vorliegende Erfindung betrifft ein Verfahren zur Herstellung eines Copolymers, das Copolymer sowie die Verwendung des Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der Praxis erfolgt die Copolymerisation meist in der Semi-Batch-Fahrweise. Die WO 2005/075529 beschreibt ein semikontinuierliches Herstellungsverfahren für besagte Copolymere, in welchem das Polyethermakromonomer vorgelegt wird und anschließend das Säuremonomer über die Zeit der Vorlage zudosiert wird. Obwohl das beschriebene Verfahren bereits kostengünstig ist und als Verfahrensprodukt Hochleistungsfließmittel erhalten werden, besteht weiterhin ein Bestreben, die Qualität des Verfahrensprodukts noch weiter zu verbessern und zwar möglichst ohne in einem wesentlichen Maße die Wirtschaftlichkeit des Verfahrens zu verschlechtern und zwar sowohl unter Gesichtspunkten der Performance als auch der Wirtschaftlichkeit.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel, eine gute Performance zeigen.

Die Lösung dieser Aufgabe ist ein Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, wobei die Dosierung des Säuremonomers in den Polymerisationsreaktor so lange erfolgt bis mindestens 70 Mol-% des vorgelegten Polyethermakromonomers durch die Polymerisation umgesetzt sind, als radikalischer Polymerisationsinitiator ein H₂O₂ enthaltendes Redoxinitiatorsystem eingesetzt wird, der pH-Wert des wässrigen Mediums während der Polymerisation auf 2,3 bis 6,8 gehalten wird, die Temperatur des wässrigen Mediums während der Polymerisation auf 0 bis 43 °C eingestellt wird, zu Beginn der Polymerisation die Temperatur des wässrigen Mediums maximal 28 °C beträgt, pro eingesetztes Mol Polyethermakromonomer insgesamt 1 bis 20 Mol Säuremonomer in den Polymerisationsreaktor eindosiert werden, ein als wasserlösliche Mercaptoverbindung vorliegender Kettenregler vor und/oder während der radikalischen Polymerisation in den Polymerisationsreaktor eingeleitet wird, insgesamt mindestens 50 Mol-% aller durch die Polymerisation umgesetzten Monomere als Säuremonomer und/oder Polyethermakromonomer vorliegen, das Polyethermakromonomer insgesamt mindestens 6 Ethoxygruppen aufweist, das eingesetzte Polyethermakromonomer sowie das eingesetzte Säuremonomer so ausgewählt sind, dass das eingesetzte Polyethermakromonomer sowie das eingesetzte Säuremonomer jeweils während der Dauer der Polymerisation in dem wässrigen Medium gelöst sind, das Gewichtsverhältnis von eingesetztem Polyethermakromonomer zu eingesetztem Wasser 5 : 1 bis 1 : 5 beträgt, das Molverhältnis von eingesetztem Säuremonomer zum eingesetzten als wasserlösliche Mercaptoverbindung vorliegenden Regler 3 : 1 bis 1000 : 1 beträgt, das Molverhältnis von eingesetztem H₂O₂ zum eingesetzten als wasserlösliche Mercaptoverbindung vorliegenden Regler 1 : 30 bis 10 : 1 beträgt und das eingesetzte Polyethermakromonomer in der Form bereitgestellt wird, dass dem eingesetzten Polyethermakromonomer 0,1 ppm bis 10000 ppm eines als organische Verbindung vorliegenden Stabilsators zugesetzt ist, der sich für die Hemmung der oxidativen Zersetzung von in Polyethern vorhandenen Alkoxygruppen eignet und/oder das eingesetzte Polyethermakromonomer unter Abreicherung von gelöstem Sauerstoff mit gelöstem Stickstoff angereichert ist.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Acrylsäureester wie Ethylacrylat). Polyethermakromonomere im Sinne der vorliegenden Erfindung sind radikalisch copolymerisierbare Verbindungen mit mindestens einer Kohlenstoffdoppelbindung, welche mindestens sieben Ether-Sauerstoffatome aufweisen und zwar mit der Maßgabe, dass die in dem Copolymer enthaltenen Polyethermakromonomerstruktureinheiten Seitenketten aufweisen, die mindestens sieben Ether-Sauerstoffatome enthalten.

Unter Abreicherung von gelöstem Sauerstoff mit gelöstem Stickstoff angereichert bedeutet, dass der Anteil an gelöstem Sauerstoff herabgesetzt wird und der Anteil an gelöstem Stickstoff erhöht wird.

Es ist nicht erforderlich, dass vor der Eindosierung des Säuremonomers sämtliches in dem Polymerisationsreaktor durch radikalische Polymerisation umgesetztes Polyethermakromonomer in dem Polymerisationsreaktor vorgelegt wird. Allerdings werden mindestens 40 Mol-%, bevorzugt mindestens 80 Mol-% und besonders bevorzugt 100 Mol-% der in das Copolymer eingebauten Polyethermakromonomerstruktureinheiten durch Umsetzung von Polyethermakromonomer erzeugt, welches vor der Eindosierung des Säuremonomers in dem Polymerisationsreaktor vorgelegt wird.

Die Dosiereinrichtung kann verschiedenartig ausgebildet sein und manuell und/oder automatisch gesteuert werden. Im Falle der manuellen Steuerung kann z.B. eine Person aus einem Behälter kontinuierlich das Säuremonomer eindosieren. Eine automatische Steuerung kann beispielsweise die Zufuhrgeschwindigkeit des Säuremonomers (bevorzugt stufenlos) direkt mit dem entsprechenden pH-Wert-Messsignal koppeln.

Ein wesentlicher Vorteil des erfindungsgemäßen Verfahrens ist, dass einheitliche Copolymere herstellbar sind - und zwar bezüglich Molekulargewicht (niedriger Polydispersionsindex der Molekulargewichtsverteilung) und bezüglich des relativen Anteils der Monomerstruktureinheiten im Copolymer (chemische Einheitlichkeit). Diese Einheitlichkeit der Copolymere bewirkt letztendlich eine besonders gute Eignung als Fließmittel für hydraulische Bindemittel. Weiterhin gewährleistet das erfindungsgemäße Verfahren, dass wenig unerwünschte Nebenprodukte (z.B. abgespaltene Etherketten) entstehen. Zusammenfassend kann gesagt werden, dass das erfindungsgemäße Verfahren besonders wirtschaftlich ist und ein qualitativ hochwertiges Dispergier- bzw. Fließmittel hervorbringt.

Meist wird durch die Umsetzung des Säuremonomers eine Struktureinheit im Copolymer erzeugt, die gemäß einer der allgemeinen Formeln (Ia), (Ib), (Ic) und/oder (Id) vorliegt 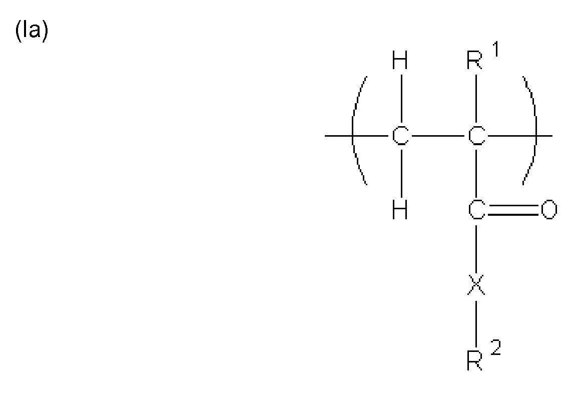 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 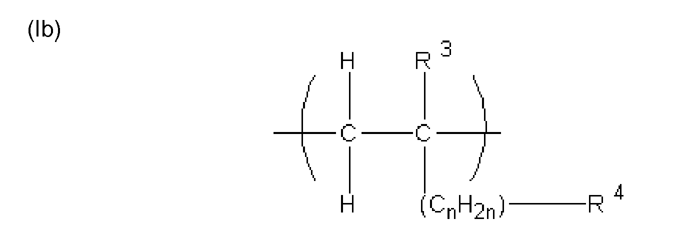 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 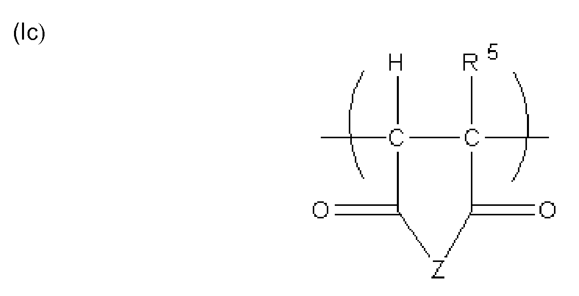 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 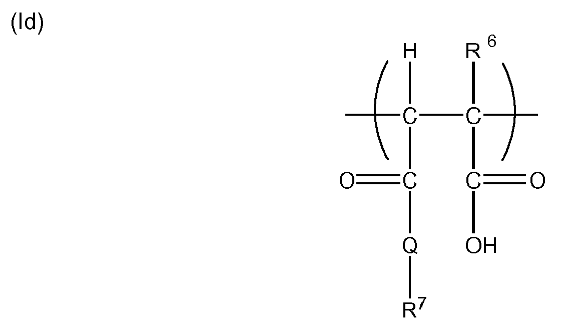 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Häufig wird als Säuremonomer Methacrylsäure, Acrylsäure, Maleinsäure, Maleinsäureanhydrid, ein Halbester der Maleinsäure oder eine Mischung aus mehreren dieser Komponenten eingesetzt.

In der Regel wird durch die Umsetzung des Polyethermakromonomers eine Struktureinheit im Copolymer erzeugt, die gemäß einer der allgemeinen Formeln (IIa), (IIb) und/oder (IIc) vorliegt 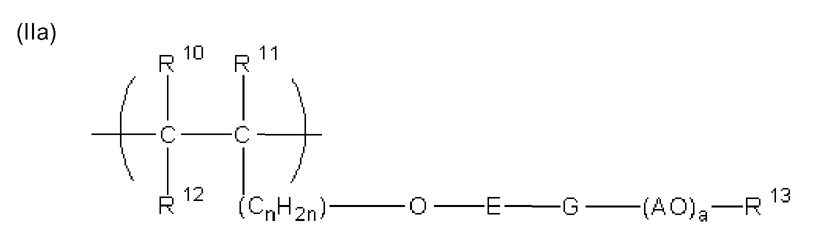 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 7 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 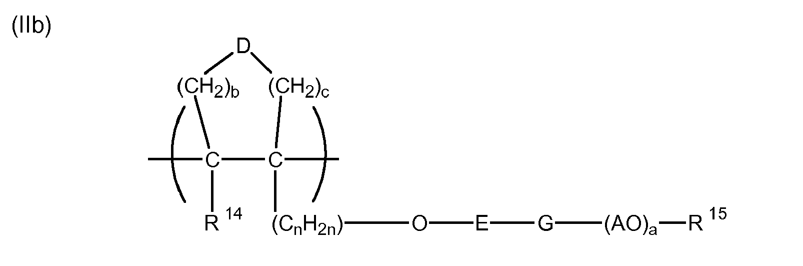 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 7 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 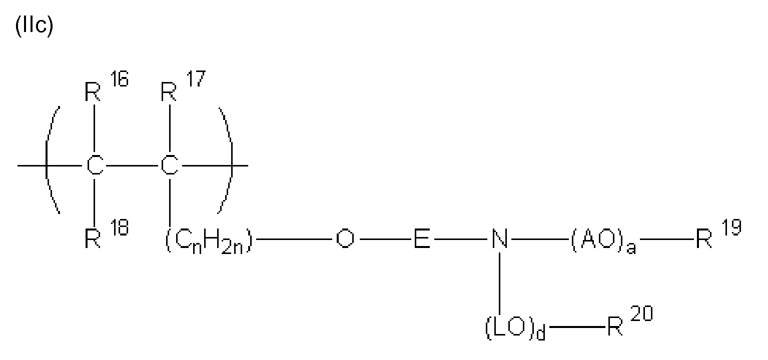 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/ oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 7 bis 350;
d gleich oder verschieden sowie repräsentiert durch eine ganze Zahl von 2 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung oder Ethoxylierung und Propoxylierung der entsprechenden Monomeralkohole).

Häufig wird als Polyethermakromonomer alkoxyliertes Isoprenol und/oder alkoxylierter Hydroxybutylvinylether und/oder alkoxylierter Diethylenglykolmonovinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 9 bis 350 eingesetzt.

In einer Ausführungsform wird als monomerer Ausgangsstoff eine vinylisch ungesättigte Verbindung in den Polymerisationsreaktor gegeben, welche durch Polymerisation umgesetzt wird, wodurch eine Struktureinheit im Copolymer erzeugt wird, die gemäß den allgemeinen Formeln (IIIa) und/oder (IIIb) vorliegt 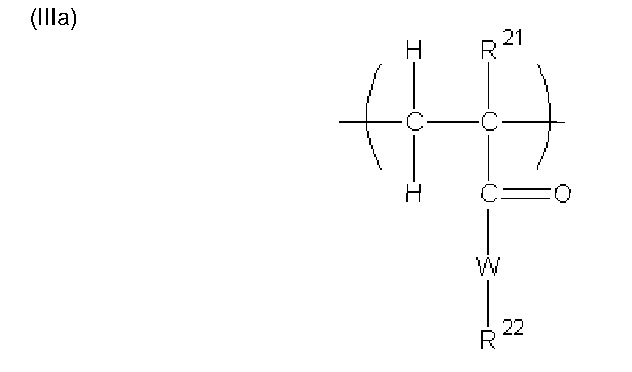 mit
R²¹ gleich oder verschieden sowie repräsentiert durch H und/oder eine unverzweigte oder verzweigte C₁ - C₄ Alkylgruppe;
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 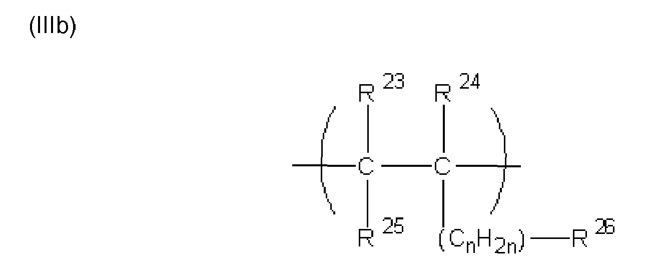 mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

Meist wird der pH-Wert des wässrigen Mediums während der Polymerisation auf 3,5 bis 6,4 gehalten und die Temperatur des wässrigen Mediums während der Polymerisation mit der Maßgabe auf 10 bis 28 °C eingestellt, dass zu Beginn der Polymerisation die Temperatur des wässrigen Mediums maximal 24 °C beträgt.

Häufig wird als H₂O₂ enthaltendes Redoxinitiatorsystem die Zusammenstellung H₂O₂/FeSO₄ gewählt, welche zusammen mit einem Reduktionsmittel eingesetzt wird.

Als Reduktionsmittel kann beispielsweise Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon, eingesetzt werden.

Der als wasserlösliche Mercaptoverbindung vorliegende Kettenregler wird meist in Form einer wässrigen Lösung in den Polymerisationsreaktor eingeleitet, wobei die wässrige Lösung mindestens 10 Gew.-% Wasser enthält. Oft wird 3-Mercaptopropionsäure und/ oder 2-Mercaptoethanol als wasserlöslicher Kettenregler eingesetzt.

In der Regel liegt das wässrige Medium in Form einer wässrigen Lösung vor.

Meist wird durch eine externe Kühleinrichtung, z.B. einen Wärmetauscher, das wässrige Medium während der Polymerisation gekühlt.

Üblicherweise liegt der Polymerisationsreaktor als semikontinuierlicher Rührkessel vor.

Meist wird das eingesetzte Polyethermakromonomer in der Form bereitgestellt, dass dem eingesetzten Polyethermakromonomer 0,1 ppm bis 10000 ppm eines als organische Verbindung vorliegenden Stabilsators zugesetzt ist, der sich für die Hemmung der oxidativen Zersetzung von in Polyethern vorhandenen Alkoxygruppen eignet. Oft sind dem eingesetzen Polyethermakromonomer 10 ppm bis 1000 ppm, bevorzugt 50 ppm bis 500 ppm, eines als organische Verbindung vorliegenden Stabilsators zugesetzt, der sich für die Hemmung der oxidativen Zersetzung von in Polyethern vorhandenen Alkoxygruppen eignet.

Geeignete Stabilisatoren (für die Hemmung der oxidativen Zersetzung von in Polyethern vorhandenen Alkoxygruppen) sind häufig ausgewählt aus Diphenylaminderivaten, wie Diphenylamin als solches, polymerem Trimethyl-dihydrochinolin, alkylierten Monophenolen, wie 2,6-Di-tert.Butyl-4-methylphenol, alkylierten Hydrochinonen wie 2,6-Di-tert.Butyl-4-methoxyphenol, Alkyliden-bis-phenolen, wie 2,2' -methylen-bis-(6-tert.Butyl-4-methylphenol), phenolischen Benzyl-verbindungen, wie 1,3,5-tri-(3,5-di-tert.Butyl-4-hydroxybenzyl)-2,4,6-trimethylbenzol, Thioethern, wie 2,2' -Thio-bis-(6-tert.Butyl-4-methylphenol) oder Aminen, wie Phenothiazin. In der Praxis besonders bewährt haben sich Hydrochinonmonomethylether, Butylhydroxytoluol (BHT), Butylhydroxyanisol (BHA) und 2,6-Di-tert.-butyl-phenol (Kerobit® TP 26) sowie N,N'-Di-sec-butyl-p-phenyldiamin (Kerobit® BPD; Kerobit® der BASF SE).

Die Abreicherung von gelöstem Sauerstoff mit gelöstem Stickstoff erfolgt in der Regel durch Einleiten von Stickstoff in die entsprechende Sauerstoff enthaltende Flüssigkeit, so dass der enthaltene Sauerstoff durch Stickstoff verdrängt wird. Das Abreichern von Sauerstoff unter Anreicherung von Stickstoff bewirkt eine Zurückdrängung der oxidativen Zersetzung von in Polyethern vorhandenen Alkoxygruppen. Beispielsweise wird das eingesetzte Polyethermakromonomer in der Weise unter Abreicherung von gelöstem Sauerstoff mit gelöstem Stickstoff angereichert, dass das eingesetzte Polyethermakromonomer gelösten Stickstoff zu gelöstem Sauerstoff in einem molaren Mengenverhältnis größer 5, bevorzugt größer 20, aufweist.

Oft beträgt das Gewichtsverhältnis von eingesetztem Polyethermakromonomer zu eingesetztem Wasser 3 : 1 bis 1 : 3 , das Molverhältnis von eingesetztem Säuremonomer zum eingesetzten als wasserlösliche Mercaptoverbindung vorliegenden Regler 5 : 1 bis 100 : 1 und das Molverhältnis von eingesetztem H₂O₂ zum eingesetzten als wasserlösliche Mercaptoverbindung vorliegenden Regler 1 : 15 bis 1 : 2.

Die Erfindung betrifft weiterhin ein Copolymer, welches gemäß dem vorstehend beschriebenen Verfahren herstellbar ist.

Weiterhin betrifft die vorliegende Erfindung die Verwendung dieses Copolymers als Dispergiermittel für hydraulische Bindemittel, insbesondere für Zement oder Gips, und/oder für latenthydraulische Bindemittel oder für Mischungen dieser Komponenten. Typischerweise liegt das hydraulische Bindemittel als Zement, Kalk, Gips, Halbhydrat oder Anhydrit oder aus Mischungen dieser Komponenten, bevorzugt jedoch als Zement vor. Das latenthydraulische Bindemittel liegt normalerweise als Flugasche, Trass oder Hochofenschlacke vor. Das Copolymer kann beispielsweise auch als Additiv für die Zementproduktion (Mahlhilfe und " Wasserreduzierer" für reine Portlandzemente bzw. Kompositzemente) eingesetzt werden.

Nachstehend soll die Erfindung anhand von Ausführungsbeispielen näher erläutert werden.

### Synthesebeispiele

Für sämtliche nachfolgend beschriebenen Synthesen wurden die jeweils eingesetzten Vinyloxybutyl- oder Isoprenylpolyethylenglykole als Schmelze gelagert, mit 200 ppm an Stabilisatoren versetzt und beständig mit Stickstoff durchperlt.

### Synthesebeispiel 1

In einem Glasreaktor, ausgestattet mit Rührer, pH-Elektrode und mehreren Zulaufeinrichtungen, wurden 200 g deionisiertes Wasser und 225 g Vinyloxybutylpolyethylenglykol-3000 (Anlagerungsprodukt aus 65 Mol Ethylenoxid an Hydroxybutylmonovinylether) vorgelegt und auf eine Polymerisationsstarttemperatur von 15 °C gekühlt (Vorlage).

In einem separaten Zulaufgefäß wurden 16,2 g Acrylsäure mit 42 g deionisiertem Wasser homogen vermischt. Mit 7,7 g einer 40 %igen Kaliumhydroxydlösung wurde die Lösung unter Kühlen auf eine Temperatur von 20°C und einen pH-Wert von 4,0 eingestellt. Anschließend wurden 0,7 g 3-Mercaptopropionsäure als Molekulargewichtsregler zugegeben (Lösung A).

Parallel wurde eine zweite Lösung bestehend aus 1,5 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6 Fa. Brüggemann GmbH) und 23,5 g Wasser hergestellt (Lösung B).

Unter Rühren und Kühlen wurden 23,3 g der Lösung A sowie anschließend 1,8 g einer 20 %igen wässrigen Natronlauge zur Vorlage gegeben, so dass ein pH-Wert von 5,8 resultierte.

Nach Erreichen dieses pH-Wertes wurden nacheinander 0,015 g Eisen-II-sulfat-Heptahydrat, 0,1 g der Lösung B sowie 0,94 g Wasserstoffperoxid (30 % in Wasser) zum Vorlagegemisch gegeben. Zeitgleich wurde mit der Zugabe von Lösung A und Lösung B zur gerührten Vorlage begonnen.

Die Zugabegeschwindigkeit der Lösung A wurde hierbei entsprechend des folgenden Dosierprofils vorgenommen. Über den gesamten Zugabezeitraum von 45 Minuten wurden ca. 15 g NaOH-Lösung (20 %) zugegeben:

| t (min) | 0 | 1,5 | 3 | 6 | 9 | 12 | 15 | 19 | 21 | 24 | 27 | 30 | 33 | 36 | 39 | 45 |
|---|---|---|---|---|---|---|---|---|---|---|---|---|---|---|---|---|
| Lösung A (g/h) | 29 | 59 | 103 | 123 | 115 | 103 | 88 | 71 | 56 | 44 | 35 | 26 | 21 | 15 | 13 | 0 |

Lösung B wurde über den genannten Zeitraum von 45 Minuten parallel mit einer Dosiergeschwindigkeit von 7 g/h zugegeben. Anschließend wurde die Dosiergeschwindigkeit der Lösung B auf 50 g/h erhöht und über einen Zeitraum von 10 Minuten unter Rühren in das Vorlagegemisch gepumpt. Nach vollständiger Zugabe der Lösungen A und B wurde kein Peroxyd mehr im Reaktionsgefäß gefunden.

| T_{Start} | Tₘₐₓ | T_{Ende} |
|---|---|---|
| 14,8 °C | 19,1 °C | 18,2 °C |

70 % Umatz zu Polymer waren nach ca. 25 Minuten Dosierzeit der Lösung A erreicht.

Anschließend wurde die erhaltene Polymerlösung mit etwa 10 g einer 20 %igen Natriumhydroxid-Lösung auf einen pH-Wert von 6,5 eingestellt.

Das erhaltene Copolymer fiel in einer leicht gelblich gefärbten Lösung an, die einen Feststoffgehalt von 46,5 % aufwies. Das mittlere Molekulargewicht des Copolymers lag bei Mw 63000 g/Mol; Umsatz laut GPC: 89 %.

### Synthesebeispiel 2:

Es wurde verfahren wie im Synthesebeispiel 1 beschrieben, jedoch wurde die 3-Mercaptopropionsäure gesondert zugegeben und folgende Monomerkombination verwendet:

| Vorlage: | |
|---|---|
| Vinyloxybutylpolyethylenglykol-1100: | 85,8 g |
| Vinyloxybutylpolyethylenglykol-5800: | 127,6 g |
| in deionisiertem Wasser: | 210,0 g |

| Lösung A: | |
|---|---|
| Maleinsäureanhydrid: | 7,8 g |
| Acrylsäure: | 2,9 g |
| Hydroxypropylacrylat: | 10,4 g |
| Hydroxyethylacrylat: | 4,6 g |
| Kaliumhydroxydlösung (40% in Wasser): | 12,5 g |
| in deionisiertem Wasser | 76,5 g |

Unter Rühren und Kühlen wurden 40,5 g der Lösung A, 0,3 g der Lösung B und 0,5 g 3-Mercaptopropionsäure so zur Vorlage gegeben.

Anschließend wurden 1,9 g 3-Mercaptopropionsäure in die übrige Lösung A gegeben. Folgendes Dosierprofil wurde über den Zugabezeitraum von 30 Minuten angewendet:

| t (min) | 0 | 2 | 4 | 8 | 10 | 12 | 14 | 16 | 18 | 22 | 26 | 30 |
|---|---|---|---|---|---|---|---|---|---|---|---|---|
| Lösung A (g/h) | 225 | 250 | 261 | 250 | 225 | 184 | 151 | 121 | 93 | 58 | 36 | 0 |

Lösung B wurde über den genannten Zeitraum von 30 Minuten parallel mit einer konstanten Dosiergeschwindigkeit von 15 g/h und anschließend über einen weiteren Zeitraum von 10 Minuten mit einer Dosiergeschwindigkeit von 50 g/h unter Rühren in die Vorlage gepumpt. Nach vollständiger Zugabe der Lösungen A und B wurde kein Peroxid mehr im Reaktionsgefäß nachgewiesen.

| T_{Start} | Tₘₐₓ | T_{Ende} |
|---|---|---|
| 15 °C | 21,2 °C | 17,8 °C |

70 % Umatz zu Polymer waren nach ca. 10 Minuten Dosierzeit der Lösung A erreicht.

Das erhaltene Copolymer fiel in einer leicht gelblich gefärbten Lösung an, die einen Feststoffgehalt von 44 % aufwies. Das mittlere Molekulargewicht des Copolymers lag bei Mw 31000 g/Mol, Umsatz laut GPC: 96 %.

### Synthesebeispiel 3:

Es wurde verfahren, wie in Synthesebeispiel 1 beschrieben, jedoch wurde folgende Monomerkombination verwendet:

| Vorlage: | |
|---|---|
| Isoprenolpolyethylenglykol-500: | 37,5 g |
| Isoprenolpolyethylenglykol-1100: | 82,5 g |
| in deionisiertem Wasser: | 87,0 g |

| Lösung A | |
|---|---|
| Acrylsäure: | 16,2 g |
| Hydroxypropylacrylat: | 5,9 g |
| Kaliumhydroxydlösung (40% in Wasser): | 12,5 g |
| in deionisiertem Wasser | 49,5 g |

| Lösung B | |
|---|---|
| Natriumhydroxymethansulfinat (Brüggolit E01) | 1,5 g |
| in deionisiertem Wasser | 23,5 g |

Unter Rühren und Kühlen wurden 29,0 g der Lösung A, 0,5 g der Lösung B und 1,05 g 3-Mercaptopropionsäure zur Vorlage gegeben.

Anschließend wurden 0,9 g 3-Mercaptopropionsäure in die übrige Lösung A gegeben. Folgendes Dosierprofil wurde über den Zugabezeitraum von 45 Minuten angewendet:

| t (min) | 0 | 1,5 | 3 | 6 | 9 | 12 | 15 | 18 | 21 | 24 | 27 | 30 | 33 | 36 | 39 | 45 |
|---|---|---|---|---|---|---|---|---|---|---|---|---|---|---|---|---|
| Lösung A (g/h) | 37 | 74 | 130 | 155 | 144 | 130 | 111 | 89 | 70 | 55 | 44 | 33 | 27 | 19 | 16 | 0 |

| T_{Start} | Tₘₐₓ | T_{Ende} |
|---|---|---|
| 14,8 °C | 20,3 °C | 16,2 °C |

70 % Umsatz waren nach ca. 25 Minuten Dosierzeit der Lösung A erreicht.

Das erhaltene Copolymer fiel in einer leicht gelblich gefärbten Lösung an, die einen Feststoffgehalt von 43 % aufwies. Mittleres Molekulargewicht: Mw 25000 g/Mol; Umsatz laut GPC: 93,5 %.

Anschließend wurde die erhaltene Polymerlösung mit etwa 28 g einer 20 %igen wässrigen Natriumhydroxid-Lösung auf einen pH-Wert von 6,5 eingestellt.

### Bestimmung des pH-Werts:

Der pH-Wert des wässrigen Mediums (welches nicht als ideale Lösung vorliegt - denn neben Wasser liegen in dem wässrigen Medium normalerweise in relativ hoher Konzentration auch organische Komponenten vor) wird allgemein zweckmäßigerweise mit einer Glaselektrode gemessen. Als pH-Wert des wässrigen Mediums wurde in den vorstehend beschriebenen experimentellen Beispielen jeweils die Messgröße zugrunde gelegt, die gewonnen wird, indem eine pH-Einstabmesskette des Typs H 6381 der Schott AG (Glaselektrode) unter den jeweiligen, vom beschriebenen Experiment vorgegebenen Temperatur- und Konzentrationsbedingungen, in die Reaktionsmischung eingebracht wird und deren erzeugtes Signal von einem Multiparameter-Messgerät des Typs ProfilLine Multi 197i der Firma WTW als Zahl ausgegeben wird. Die Kalibrierung der oben genannten pH-Einstabmesskette erfolgt mit handelsüblichen pH-Pufferlösungen (pH 4,00 und pH 7,00) in Abhängigkeit der Temperatur.

### Analyse der Copolymere aus den Synthesebeispielen:

Die Polymere wurden mittels Größenausschlusschromatographie bezüglich mittlerer Molmasse und Umsatz analysiert (Säulenkombination: OH-Pak SB-G, OH-Pak SB 804 HQ und OH-Pak SB 802.5 HQ der Firma Shodex, Japan; Eluent: wässerige Lösung aus HCO₂NH₄ (0,05 mol/l) 80 Vol% und Acetonitril 20 Vol%; Injektionsvolumen 100 µl; Flussrate 0,5ml/min). Die Kalibration zur Bestimmung der mittleren Molmasse erfolgte mit linearem Poly(ethylenoxid) und Polyethylenglykolstandards. Als Maß für den Umsatz wird der Peak des Copolymers auf eine relative Höhe von 1 normiert und die Höhe des Peaks des nicht umgesetzten Makromomers/PEG-haltigen Oligomers als Maß für den Gehalt an Restmonomer verwendet.

### Anwendungsbeispiele der Copolymere aus den Synthesebeispielen:

Die Polymere wurden auf ihre Eigenschaften als Betonfließmittel in einem geeigneten Testsystem untersucht. Hierzu wurden alle Polymere auf einen einheitlichen Feststoff, sowie mit NaOH (20 %) auf einen einheitlichen pH-Wert von 6,5 ± 0,2 eingestellt und mit geringen Mengen eines konventionellen Entschäumers zur Steuerung des Luftporengehalts versetzt.

### Anwendungsbeispiel 1:

Es wurden zunächst 7,00 kg eines Portlandzementes (Karlstadt CEM I 42,5 R), 2 kg eines K-S Mehl Füllers Calcit MS 12, und weiterhin 5,45 kg Quarzsand (0/0,5 und 0/1,0), 16,98 kg Sand 0/4, 5,65 kg Kies 4/8 sowie 18,60 kg Kies 8/16 zusammen gegeben und 10 Sekunden lang trocken gemischt. Dann wurden 0,5 kg Vorgabewasser zugegeben und weitere 120 Sekunden gemischt. Anschließend wurden 3,61 kg Restwasser zugegeben und weitere 60 Sekunden gemischt. Danach wurden jeweils 7,70·10⁻³ kg (berechnet auf 100 %) Polymer (basierend auf dem Polymerfeststoffgehalt) zugegeben und weitere 60 Sekunden gemischt (entspricht einem Wasser/Zement--Wert von 0,59 und einer Polymerdosierung von 0,11 % Feststoff bezogen auf die Zementeinwaage). Anschließend wurden das Ausbreitmaß gemäß DIN EN 12350-5, sowie das Setzmaß (slump) direkt nach der Herstellung, sowie nach 10, 30 und 60 Minuten bestimmt. Folgende Werte wurden ermittelt:

| Polymer aus | Slump (cm) nach x min. | | | | | Ausbreitmaß (cm) nach x min. | | | |
|---|---|---|---|---|---|---|---|---|---|
| | 0 | 10 | 30 | 60 | | 0 | 10 | 30 | 60 |
| Synthesebeispiel 1 | 24 | 24 | 23 | 23 | | 66 | 66 | 64,5 | 60,5 |

### Anwendungsbeispiel 2:

Es wurde verfahren wie in Anwendungsbeispiel 1 beschrieben, jedoch wurde die Mischung wie folgt angepasst:

| | |
|---|---|
| Zement Allmendingen CEM I 42,5 R | 7,00 kg |
| K-S Mehl Füller Calcit MS 12 | 2,00 kg |
| Quarzsand (0/0,5 und 0/1,0) | 5,57 kg |
| Sand 0/4 | 17,06 kg |
| Kies 4/8 | 4,29 kg |
| Kies 8/16 | 18,60 kg |
| Vorgabewasser | 0,5 kg |
| Restwasser | 3,46 kg |
| Polymer (100 %) | 0,0133 kg |

Daraus ergab sich ein Wasser/Zement-Wert von 0,57 und eine Fließmitteldosierung von 0,19 % (Polymerfeststoff auf Zement):

| Polymer | Slump (cm) nach x min. | | | | | Ausbreitmaß (cm) nach x min. | | | |
|---|---|---|---|---|---|---|---|---|---|
| | 0 | 10 | 30 | 60 | | 0 | 10 | 30 | 60 |
| Synthesebeispiel 2 | 22 | 22 | 21 | 21 | | 60,5 | 60,5 | 58,5 | 57,5 |

### Anwendungsbeispiel 3:

Es wurde verfahren wie in Anwendungsbeispiel 1 beschrieben, jedoch wurde die Mischung wie folgt angepasst:

| | |
|---|---|
| Portlandzement Karlstadt CEM I 42,5 R | 7,00 kg |
| K-S Mehl Füller Calcit MS 12 | 2,00 kg |
| Quarzsand (0/0,5 und 0/1,0) | 5,47 kg |
| Sand 0/4 | 17,05 kg |
| Kies 4/8 | 5,67 kg |
| Kies 8/16 | 18,68 kg |
| Vorgabewasser | 0,5 kg |
| Restwasser | 3,53 kg |
| Polymer (100 %) | 0,0126 kg |

Daraus ergibt sich ein Wasser-Zement-Wert von 0,58 und eine Fließmitteldosierung von 0,18 % (Feststoff auf Zementgewicht):

| Polymer | Slump (cm) nach x min. | | | | | Ausbreitmaß (cm) nach x min. | | | |
|---|---|---|---|---|---|---|---|---|---|
| | 0 | 10 | 30 | 60 | | 0 | 10 | 30 | 60 |
| Synthesebeispiel3 | 23 | 22,5 | 21 | 20 | | 63,5 | 62 | 60,5 | 58,5 |

Die erfindungsgemäß hergestellten Copolymere zeigen hervorragende Verflüssigungswirkungen (Wasserreduktion) direkt nach Herstellung des Betons. Weiterhin weisen diese weder eine für den Anwender unerwünschte Nachverflüssigung noch einen merklichen Verlust der Verarbeitbarkeit auf.

## Patentansprüche

1. Verfahren zur Herstellung eines Copolymers in semikontinuierlicher Betriebsweise in einer Polymerisationsvorrichtung, enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, wobei die Dosierung des Säuremonomers in den Polymerisationsreaktor so lange erfolgt bis mindestens 70 Mol-% des vorgelegten Polyethermakromonomers durch die Polymerisation umgesetzt sind, als radikalischer Polymerisationsinitiator ein H₂O₂ enthaltendes Redoxinitiatorsystem eingesetzt wird, der pH-Wert des wässrigen Mediums während der Polymerisation auf 2,3 bis 6,8 gehalten wird, die Temperatur des wässrigen Mediums während der Polymerisation auf 0 bis 43 °C eingestellt wird, zu Beginn der Polymerisation die Temperatur des wässrigen Mediums maximal 28 °C beträgt, pro eingesetztes Mol Polyethermakromonomer insgesamt 1 bis 20 Mol Säuremonomer in den Polymerisationsreaktor eindosiert werden, ein als wasserlösliche Mercaptoverbindung vorliegender Kettenregler vor und/oder während der radikalischen Polymerisation in den Polymerisationsreaktor eingeleitet wird, insgesamt mindestens 50 Mol-% aller durch die Polymerisation umgesetzten Monomere als Säuremonomer und/oder Polyethermakromonomer vorliegen, das Polyethermakromonomer insgesamt mindestens 6 Ethoxygruppen aufweist, das eingesetzte Polyethermakromonomer sowie das eingesetzte Säuremonomer so ausgewählt sind, dass das eingesetzte Polyethermakromonomer sowie das eingesetzte Säuremonomer jeweils während der Dauer der Polymerisation in dem wässrigen Medium gelöst sind, das Gewichtsverhältnis von eingesetztem Polyethermakromonomer zu eingesetztem Wasser 5 : 1 bis 1 : 5 beträgt, das Molverhältnis von eingesetztem Säuremonomer zum eingesetzten als wasserlösliche Mercaptoverbindung vorliegenden Regler 3 : 1 bis 1000 : 1 beträgt, das Molverhältnis von eingesetztem H₂O₂ zum eingesetzten als wasserlösliche Mercaptoverbindung vorliegenden Regler 1 : 30 bis 10 : 1 beträgt und das eingesetzte Polyethermakromonomer in der Form bereitgestellt wird, dass dem eingesetzten Polyethermakromonomer 0,1 ppm bis 10000 ppm eines als organische Verbindung vorliegenden Stabilisators zugesetzt ist, der sich für die Hemmung der oxidativen Zersetzung von in Polyethern vorhandenen Alkoxygruppen eignet und/ oder das eingesetzte Polyethermakromonomer unter Abreicherung von gelöstem Sauerstoff mit gelöstem Stickstoff angereichert ist.

2. Verfahren nach Anspruch 1, **dadurch gekennzeichnet, dass** durch die Umsetzung des Säuremonomers eine Struktureinheit im Copolymer erzeugt wird, die gemäß einer der allgemeinen Formeln (Ia), (Ib), (Ic) und/oder (Id) vorliegt 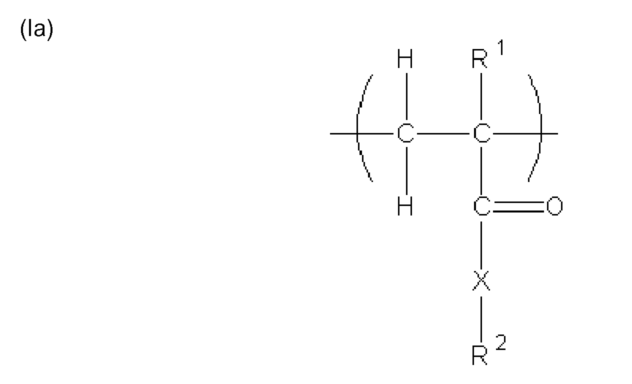 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 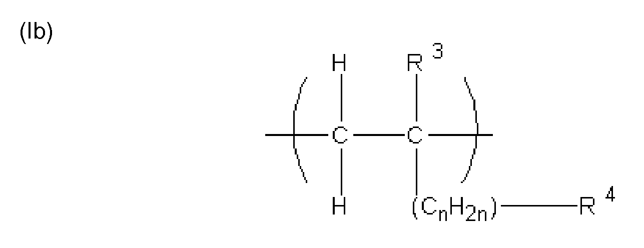 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 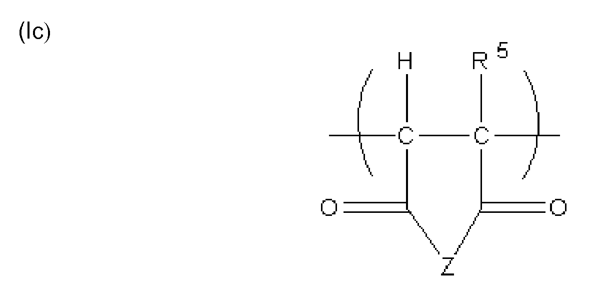 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 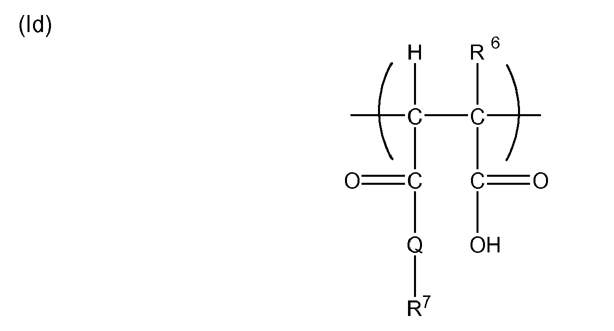 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

3. Verfahren nach Anspruch 1 oder 2, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

4. Verfahren nach einem der Ansprüche 1 bis 3, **dadurch gekennzeichnet, dass** durch die Umsetzung des Polyethermakromonomers eine Struktureinheit im Copolymer erzeugt wird, die gemäß einer der allgemeinen Formeln (IIa), (IIb) und/oder (IIc) vorliegt 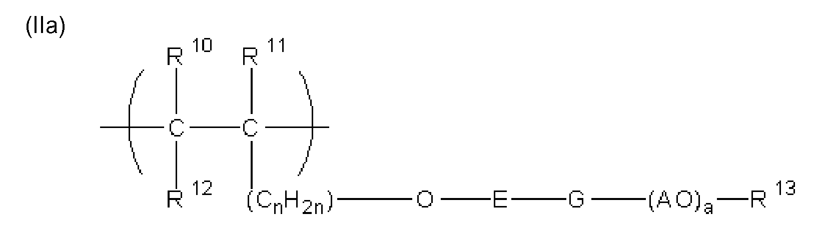 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 7 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 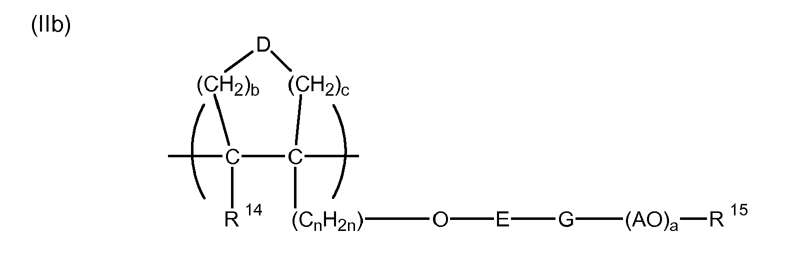 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 7 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 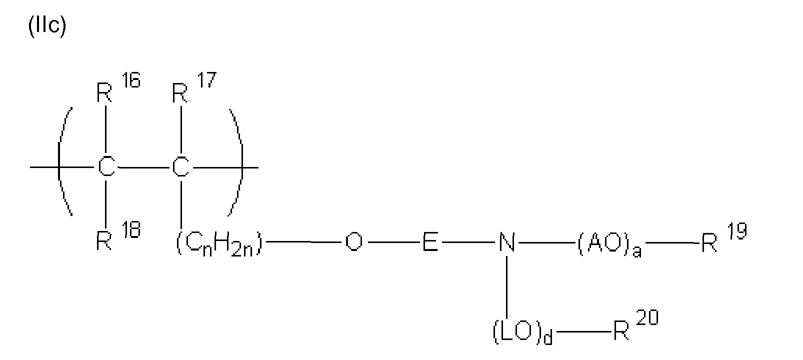 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/ oder ortho, meta- oder parasubstituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 7 bis 350;
d gleich oder verschieden sowie repräsentiert durch eine ganze Zahl von 2 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

5. Verfahren nach einem der Ansprüche 1 bis 4, **dadurch gekennzeichnet, dass** als Polyethermakromonomer alkoxyliertes Isoprenol und/oder alkoxylierter Hydroxybutylvinylether und/ oder alkoxylierter Diethylenglykolmonovinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 9 bis 350 eingesetzt wird.

6. Verfahren nach einem der Ansprüche 1 bis 5, **dadurch gekennzeichnet, dass** als monomerer Ausgangsstoff eine vinylisch ungesättigte Verbindung in den Polymerisationsreaktor gegeben wird, welche durch Polymerisation umgesetzt wird und dadurch eine Struktureinheit im Copolymer erzeugt wird, die gemäß der allgemeinen Formeln (IIIa) und/oder (IIIb) vorliegt 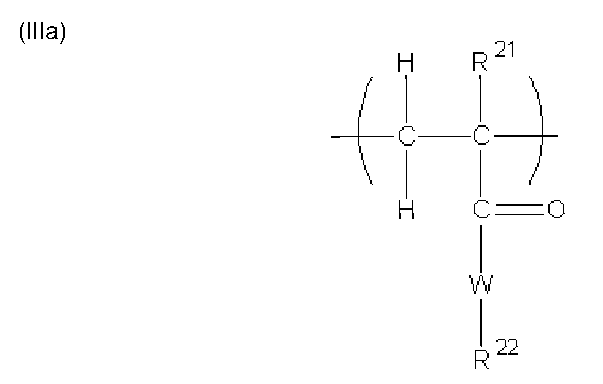 mit
R²¹ gleich oder verschieden sowie repräsentiert durch H und/oder eine unverzweigte oder verzweigte C₁ - C₄ Alkylgruppe;
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 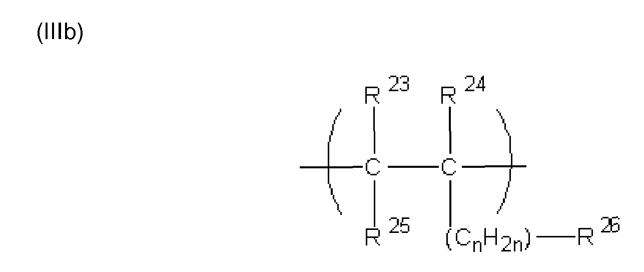 mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

7. Verfahren nach einem der Ansprüche 1 bis 6, **dadurch gekennzeichnet, dass** der pH-Wert des wässrigen Mediums während der Polymerisation auf 3,5 bis 6,4 gehalten wird und die Temperatur des wässrigen Mediums während der Polymerisation mit der Maßgabe auf 10 bis 28 °C eingestellt wird, dass zu Beginn der Polymerisation die Temperatur des wässrigen Mediums maximal 24 °C beträgt.

8. Verfahren nach Anspruch 7, **dadurch gekennzeichnet, dass** als H₂O₂ enthaltendes Redoxinitiatorsystem die Zusammenstellung H₂O₂/FeSO₄ gewählt wird, welche zusammen mit einem Reduktionsmittel eingesetzt wird.

9. Verfahren nach Anspruch 8, **dadurch gekennzeichnet, dass** als Reduktionsmittel Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon, eingesetzt werden.

10. Verfahren nach einem der Ansprüche 8 oder 9, **dadurch gekennzeichnet, dass** der als wasserlösliche Mercaptoverbindung vorliegende Kettenregler in Form einer wässrigen Lösung in den Polymerisationsreaktor eingeleitet wird, welche mindestens 10 Gew.-% Wasser enthält.

11. Verfahren nach einem der Ansprüche 1 bis 10, **dadurch gekennzeichnet, dass** 3-Mercaptopropionsäure als wasserlösliche Mercaptoverbindung vorliegender Kettenregler eingesetzt wird.

12. Verfahren nach einem der Ansprüche 1 bis 11, **dadurch gekennzeichnet, dass** das wässrige Medium in Form einer wässrigen Lösung vorliegt.

13. Verfahren nach einem der Ansprüche 1 bis 12, **dadurch gekennzeichnet, dass** der Polymerisationsreaktor als semikontinuierlicher Rührkessel vorliegt.

14. Verfahren nach einem der Ansprüche 1 bis 13, **dadurch gekennzeichnet, dass** das eingesetzte Polyethermakromonomer in der Form bereitgestellt wird, dass dem eingesetzen Polyethermakromonomer 0,1 ppm bis 10000 ppm eines als organische Verbindung vorliegenden Stabilsators zugesetzt sind, der sich für die Hemmung der oxidativen Zersetzung von in Polyethern vorhandenen Alkoxygruppen eignet und zusätzlich das eingesetzte Polyethermakromonomer unter Abreicherung von gelöstem Sauerstoff mit gelöstem Stickstoff angereichert ist.

15. Verfahren nach einem der Ansprüche 1 bis 14, **dadurch gekennzeichnet, dass** dem eingesetzen Polyethermakromonomer 10 ppm bis 1000 ppm, bevorzugt 50 ppm bis 500 ppm, eines als organische Verbindung vorliegenden Stabilsators zugesetzt sind, der sich für die Hemmung der oxidativen Zersetzung von in Polyethern vorhandenen Alkoxygruppen eignet.

16. Verfahren nach einem der Ansprüche 1 bis 15, **dadurch gekennzeichnet, dass** das Gewichtsverhältnis von eingesetztem Polyethermakromonomer zu eingesetztem Wasser 3 : 1 bis 1 : 3 beträgt, das Molverhältnis von eingesetztem Säuremonomer zum eingesetzten als wasserlösliche Mercaptoverbindung vorliegenden Regler 5 : 1 bis 100 : 1 beträgt, das Molverhältnis von eingesetztem H₂O₂ zum eingesetzten als wasserlösliche Mercaptoverbindung vorliegenden Regler 1 : 15 bis 1 : 2 beträgt.

17. Copolymer herstellbar gemäß dem Verfahren nach einem der Ansprüche 1 bis 16.

18. Verwendung eines Copolymers gemäß Anspruch 17 als Dispergiermittel für hydraulische Bindemittel, insbesondere für Zement oder Gips, oder für latenthydraulische Bindemittel oder Mischungen derselben.
